# FASCICULE DE BREVET EUROPEEN

(11) **EP 3 077 141 B1**
(45) Date de publication et mention de la délivrance du brevet: **20.09.2017**
(21) Numéro de dépôt: 14825408.9
(22) Date de dépôt: 04.12.2014
(51) Int. Cl.: B22F 3/105, B22F 7/06, B22F 5/00, B22F 5/04, C22C 1/04, C22C 1/05, B22F 3/10, B29C 67/00, C22C 32/00

(54) **PROCÉDÉE DE FABRICATION D'UNE PIÈCE PAR FUSION SÉLECTIVE DE POUDRE**
VERFAHREN ZUR HERSTELLUNG EINES BAUTEILS DURCH SELEKTIVE PULVERSCHMELZUNG
METHOD FOR PRODUCING A PART BY SELECTIVE MELTING OF POWDER

(30) Priorité: 06.12.2013 FR 1362253
(43) Date de publication de la demande: 12.10.2016
(73) Titulaire: SNECMA, 75015 Paris (FR)
(72) Inventeur: KNITTEL, Stéphane, 77550 Moissy-Cramayel Cedex (FR); BILHE, Pascal Fabrice, 77550 Moissy-Cramayel Cedex (FR)
(74) Mandataire: Milien, Jean-Baptiste Aurélien
(86) Numéro de dépôt international: PCT/FR2014/053169
(87) Numéro de publication internationale: WO 2015/082853

(56) Documents cités:
- SHISHKOVSKY I V ET AL: "Surface Laser Sintering of exothermic powder compositions; A thermal and SEM/EDX study", JOURNAL OF THERMAL ANALYSIS AND CALORIMETRY, KLUWER ACADEMIC PUBLISHERS, DORDRECHT, NL, vol. 91, no. 2, 13 octobre 2007 (2007-10-13), pages 427-436, XP019577809, ISSN: 1572-8943

## Description

### DOMAINE TECHNIQUE

Le présent exposé concerne un procédé de fabrication d'une pièce par fusion sélective de poudre.

### ARRIERE PLAN

On connaît déjà des procédés de fabrication de pièces par fusion sélective de poudre. Ces procédés consistent à fabriquer une pièce par superposition de couches de poudre, ces couches étant déposées et fondues localement les unes après les autres au moyen d'un faisceau laser ou d'un faisceau d'électrons passant sur la surface de chaque couche. Le parcours du faisceau sur chaque couche est déterminé par un système dans lequel on a enregistré les coordonnées tridimensionnelles des points des couches successives à réaliser. Ces procédés sont connus sous les dénominations anglaises "direct metal laser sintering", "selective laser melting", "laser beam melting" ou "electron beam melting".

Des exemples connus de procédés de ce type sont décrits dans les documents de brevet WO2012160291A1, WO2013060981A2 et FR2982182A1.

Dans ces procédés, la fusion de la poudre de chacune des couches nécessite une énergie de faisceau très importante et requiert un certain temps correspondant au temps de parcours du faisceau sur la couche. Le coût de fabrication d'une pièce selon ces procédés est donc relativement élevé du fait notamment de la consommation énergétique associée à la production d'un faisceau de haute énergie. En outre, le temps de fabrication est relativement long du fait notamment du nombre élevé de passes du faisceau.

Il existe donc un besoin pour un nouveau type de procédé.

La publication « Surface laser sintering of exothermic power compositions: A thermal and SEM/EDX study », Journal of Thermal Analysis and Calorimetry, Vol. 91 (2008), no. 2, pages 427-436, par I. V. Shishkovsky *et al.,* décrit un procédé dans lequel on déplace un faisceau laser sur une unique couche de poudre comprenant une mixture de poudres de nickel et d'aluminium. L'énergie apportée par le faisceau laser initie une réaction exothermique entre le nickel et l'aluminium.

### PRESENTATION GENERALE

Le présent exposé concerne un procédé de fabrication d'une pièce par fusion sélective de poudre, dans lequel:
- on dépose une première couche d'une première poudre ayant comme élément principal un premier élément;
- on dépose sur la première couche une deuxième couche d'une deuxième poudre ayant comme élément principal un deuxième élément, différent du premier élément;
- on déplace un premier faisceau énergétique, par exemple un faisceau laser ou un faisceau d'électrons, sur la deuxième couche, l'énergie apportée par le premier faisceau permettant d'initier une réaction exothermique entre le premier élément et le deuxième élément, l'énergie dégagée par cette réaction exothermique permettant de fondre ensemble, localement, les première et deuxième couches.

Selon ce procédé, l'énergie nécessaire à la fusion locale (ou fusion sélective) de la deuxième couche est apportée par la réaction exothermique déclenchée. Par conséquent, l'énergie apportée par le premier faisceau peut être choisie inférieure à l'énergie nécessaire à la fusion locale de la deuxième couche, tout en restant suffisante pour initier ladite réaction exothermique.

L'énergie apportée par le premier faisceau à une certaine zone de la deuxième couche dépend de la puissance du faisceau et de sa vitesse de passage sur cette zone. Diminuer l'énergie requise permet ainsi de diminuer la puissance du faisceau et/ou d'augmenter la vitesse de passage du faisceau. Le procédé permet ainsi de diminuer la consommation énergétique liée à la production du faisceau, par diminution de la puissance du faisceau, et/ou d'augmenter la vitesse de passage du faisceau sur la deuxième couche. Il en résulte une diminution des coûts de fabrication et/ou une augmentation de la cadence de fabrication de la pièce.

De plus, comme l'énergie nécessaire à la fusion locale de la première couche est également apportée par la réaction exothermique déclenchée, il est possible de ne pas passer de faisceau énergétique sur cette première couche. Ceci permet également de diminuer les coûts de production, par diminution de la consommation énergétique, et/ou d'augmenter la cadence de production par diminution du nombre de passes total du faisceau. En particulier, ce nombre de passes peut être divisé par deux par rapport aux procédés classiques.

Dans certains modes de réalisation, on déplace un deuxième faisceau énergétique sur la première couche, avant de déposer la deuxième couche, l'énergie apportée par le deuxième faisceau permettant de fondre superficiellement et localement la première couche. Une telle fusion superficielle permet, notamment, de consolider la première couche pour faciliter le dépôt de la deuxième couche sur celle-ci. Il s'agit ici de faire fondre seulement la poudre se trouvant à la surface de la première couche et non pas de faire fondre la poudre dans toute l'épaisseur de la première couche. L'énergie apportée par le deuxième faisceau peut donc être choisie inférieure à l'énergie nécessaire à une fusion locale totale de la première couche, tout en restant suffisante pour provoquer une fusion locale superficielle. Dans ce cas, comparativement aux procédés classiques, la consommation énergétique est plus faible et/ou la cadence de production est plus élevée.

Un tel procédé trouve une application particulière dans la fabrication de pièces métalliques. Par pièce "métallique", on entend désigner une pièce en métal, en alliage métallique ou en cermet. Il peut s'agir, de pièces métalliques soumises à de hautes températures en fonctionnement et, en particulier, de pièces métalliques en alliage réfractaire. En effet, ces pièces sont difficiles à fabriquer correctement par des procédés de fonderie ou de coulée: on constate des problèmes d'interaction chimique avec les moules, d'affinité des éléments constitutifs de l'alliage coulé avec l'oxygène, de vitesse de solidification trop importante, etc., qui conduisent souvent à un alliage hors équilibre, présentant une microstructure désordonnée et des défauts métallurgiques importants (retassures, ségrégations, fissuration, etc.). Le procédé de fabrication proposé permet, au contraire, d'obtenir des pièces homogènes en microstructure et en composition, de bonne qualité métallurgique et/ou ayant une bonne ténacité à température ambiante.

En particulier, un tel procédé peut être utilisé pour fabriquer une pièce de turbomachine. Sans être limitatif, la pièce considérée peut être une partie de turbine haute ou basse pression d'un turboréacteur d'aéronef. Par exemple, il peut s'agir d'une aube de turbine.

Outre les caractéristiques qui viennent d'être mentionnées plus haut, le procédé peut présenter une ou plusieurs des caractéristiques suivantes, considérées individuellement ou selon des combinaisons techniquement possibles:
- la première poudre est métallique,
- la deuxième poudre est métallique,
- le premier élément, i.e. l'élément principal, ou majoritaire, de la première poudre, est choisi parmi les éléments suivants: Nb, Mo, Ti, V, Ta, Cr, Fe, Co, Ni,
- le premier élément est Nb, Mo ou Ti, et, en particulier, la première poudre est une poudre d'un alliage contenant majoritairement les éléments Nb, Mo ou Ti associés à d'autres métaux de transitions,- la première poudre est une poudre d'alliage métallique comprenant des éléments d'addition choisis parmi les éléments suivants: Si, Ti, Cr, Al, Hf, Mo, Sn, B, si le premier élément est Nb ou Mo, et des éléments d'addition choisis parmi les éléments suivants: Al, Nb, Cr, Ta, W, Mo, B, Hf, Zr, V, si le premier élément est Ti,
- le deuxième élément, i.e. l'élément principal, ou majoritaire, de la deuxième poudre, est choisi parmi les éléments suivants: Si ou Al,
- la deuxième poudre est une poudre de Si ou une poudre d'Al.
- la réaction exothermique a lieu entre le premier élément et Si ou Al, et aboutit à la formation de siliciures ou d'aluminiures.

Les réactions de formation des siliciures ou des aluminiures étant fortement exothermiques, elles permettent de fondre ensemble, localement, des première et deuxième poudres ayant les compositions précitées.

Les caractéristiques et avantages du procédé, ainsi que d'autres, apparaîtront à la lecture de la description détaillée qui suit, d'exemples de mise en oeuvre. Cette description détaillée fait référence aux dessins annexés.

### BREVE DESCRIPTION DES DESSINS

Les dessins annexés sont schématiques et ne sont pas à l'échelle, ils visent avant tout à illustrer les principes de l'invention.

Sur ces dessins, d'une figure (FIG) à l'autre, des éléments (ou parties d'élément) identiques sont repérés par les mêmes signes de référence.

La FIG 1 représente un exemple d'installation pour la mise en oeuvre du procédé.

Les FIGS 2 et 3 représentent schématiquement différentes étapes du procédé.

### DESCRIPTION DETAILLEE D'EXEMPLE(S)

Des exemples de mise en oeuvre sont décrits en détail ci-après, en référence aux dessins annexés. Ces exemples illustrent les caractéristiques et les avantages de l'invention. Il est toutefois rappelé que l'invention ne se limite pas à ces exemples.

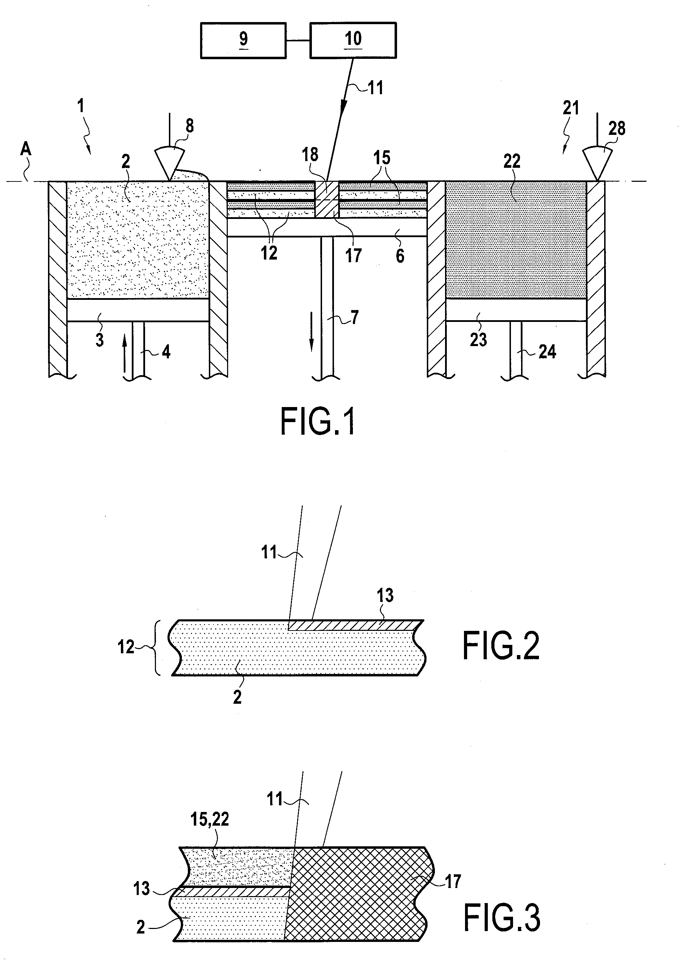

Un exemple d'installation de fabrication d'une pièce par fusion sélective de poudre est représenté sur la FIG 1. Elle comprend :
un premier réservoir 1 contenant une première poudre 2 et dont la paroi de fond 3 est mobile et déplaçable en translation,
un deuxième réservoir 21 contenant une deuxième poudre 22 et dont la paroi de fond 23 est mobile et déplaçable en translation, et
une cuve 5 située entre les réservoirs 1 et 21, et dont la paroi de fond 6 est également déplaçable en translation.

Dans l'exemple, les parois de fond 3, 23 et 6 sont chacune constituées par un plateau solidaire en translation de la tige 4, 7, 24 d'un actionneur, e.g. d'un vérin.

L'installation comprend un racleur 8 ou un rouleau permettant d'amener une quantité de poudre 2 du réservoir 1 vers la cuve 5, par déplacement sur un plan horizontal A, et un racleur 28 ou un rouleau permettant d'amener une quantité de poudre 22 du réservoir 21 vers la cuve 5, par déplacement sur le plan horizontal A. L'installation comprend également des moyens 9 de génération d'un faisceau laser ou d'un faisceau d'électrons, couplés à un dispositif 10 permettant d'orienter et de déplacer le faisceau 11.

Les étapes de fabrication d'une pièce à l'aide de cette installation sont les suivantes.

Tout d'abord, le fond 3 du réservoir 1 est déplacé vers le haut de manière à ce qu'une certaine quantité de la première poudre 2 soit située au-dessus du plan horizontal A. Le racleur 8 est alors déplacé de la gauche vers la droite (en référence à la FIG 1), de manière à racler ladite poudre 2 sur le dessus du réservoir 1 et l'amener dans la cuve 5. La quantité de poudre 2 et la position de la paroi de fond 6 de la cuve 5 sont déterminées de façon à former une première couche 12 de poudre d'une épaisseur choisie et constante.

Comme illustré sur la FIG 2, un faisceau laser ou un faisceau d'électrons 11 balaye ensuite une zone déterminée de la couche 12, de manière à faire fondre localement et superficiellement la première poudre 2 de cette couche 12, aux endroits balayés par le faisceau. Les zones fondues se solidifient en formant une peau 13 à la surface de la couche 12. On notera que cette étape de formation de la peau 13 est optionnelle.

La paroi de fond 6 de la cuve 5 est ensuite descendue.

La paroi de fond 23 du réservoir 21 est déplacée vers le haut de manière à ce qu'une certaine quantité de la deuxième poudre 22 soit située au-dessus du plan horizontal A. Le racleur 28 est alors déplacé de la droite vers la gauche (en référence à la FIG 1), de manière à racler ladite poudre 22 sur le dessus du réservoir 21 et à l'amener dans la cuve 5, sur la première couche 12. La quantité de poudre 22 et la position de la paroi de fond 6 de la cuve 5 sont déterminées de façon à former une deuxième couche 15 de poudre d'une épaisseur choisie et constante.

Comme illustré sur la FIG 3, un faisceau laser ou un faisceau d'électrons 11 balaye ensuite une zone déterminée de la deuxième couche 15, de manière à faire fondre ensemble les premières et deuxièmes couches 12, 15 dans la zone balayée. Les zones fondues se solidifient en formant une première couche de matière 17.

La paroi de fond 6 est descendue et une nouvelle couche 12 de poudre 2 ainsi qu'une nouvelle couche 15 de poudre 22 sont amenées successivement, de la même manière que précédemment, sur la première couche de matière 17. Par déplacement contrôlé du faisceau 11, une seconde couche de matière 18 est formée sur la première couche de matière 17, comme illustré sur la FIG 1.

Ces opérations sont répétées jusqu'à la réalisation complète de la pièce par superposition des nombreuses couches de matière.

La pièce fabriquée est, par exemple, une pièce métallique soumise à de hautes températures en fonctionnement, plus particulièrement des températures supérieures à 600 °C, par exemple des températures comprises entre 600 °C ou 1500 °C, ou des températures supérieures à 1500 °C. Ce type de pièce est appelé ci-après "pièce réfractaire". La température maximale de fonctionnement que peut supporter la pièce dépend bien entendu de la nature de l'alliage utilisé.

La première poudre 2 est, par exemple, une poudre métallique d'alliage à base de niobium (Nb) ou de molybdène (Mo). Ces alliages ont l'avantage de présenter des points de fusion très élevés, supérieurs aux superalliages actuellement utilisés pour fabriquer des pièces réfractaires. Par ailleurs, les alliages de base Nb permette de réduire significativement la masse de la pièce fabriquée en raison de leur faible densité (comparativement aux superalliages de base nickel), tout en conservant de bonnes propriétés mécaniques. De tels avantages sont intéressants, notamment, dans le domaine aéronautique.

Les alliages à base de niobium susmentionnés peuvent, par exemple, contenir un ou plusieurs éléments d'addition parmi les éléments suivants:
silicium (Si), titane (Ti), chrome (Cr), aluminium (Al), hafnium (Hf), molybdène (Mo), étain (Sn), etc. Les alliages à base de molybdène susmentionnés peuvent, par exemple, contenir un ou plusieurs éléments d'addition parmi le silicium (Si), le bore (B) et le zirconium (Zr).

La deuxième poudre 22 est, par exemple, une poudre à base de silicium. Par exemple, la teneur massique en Si de cette poudre est supérieure à 80% et peut être proche de 100%.

Dans un autre exemple, la première poudre 2 est une poudre métallique d'alliage à base de titane (Ti). Cet alliage à base de titane peut, par exemple, contenir un ou plusieurs éléments d'addition parmi les éléments suivants : aluminium (Al), niobium (Nb), chrome (Cr), tantale (Ta), tungstène (W), molybdène (Mo), bore (B), hafnium (Hf), zirconium (Zr), vanadium (V), etc. La deuxième poudre 22 est alors, par exemple, une poudre à base d'aluminium (Al), bien qu'une poudre à base de silicium (Si) soit aussi envisageable.

La granulométrie de la deuxième poudre 22 peut être inférieure à la granulométrie de la première poudre 2. La granulométrie de la première poudre 2 peut être comprise entre 20 et 60 microns.

La deuxième poudre 22 présente, entre autres avantages, le fait d'avoir une température de fusion bien inférieure à celle de la première poudre 2. La deuxième poudre 22 peut, par ailleurs, permettre de « boucher » des fissures éventuelles au sein des couches de matière lors de leur formation.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Procédé de fabrication d'une pièce par fusion sélective de poudre, dans lequel:
- on dépose une première couche (12) d'une première poudre (2) ayant comme élément principal un premier élément;
- on dépose sur la première couche une deuxième couche (15) d'une deuxième poudre (22) ayant comme élément principal un deuxième élément, différent du premier élément;
- on déplace un premier faisceau énergétique (11), par exemple un faisceau laser ou un faisceau d'électrons, sur la deuxième couche (15), l'énergie apportée par le premier faisceau permettant d'initier une réaction exothermique entre le premier élément et le deuxième élément, l'énergie dégagée par cette réaction exothermique permettant de fondre ensemble, localement, les première et deuxième couches (12, 15).

2. Procédé selon la revendication 1, dans lequel:
- le premier élément est choisi parmi les éléments suivants: Nb, Mo, V, Ta, Cr, Fe, Co, Ni;
- le deuxième élément est choisi parmi les éléments suivants: Si ou Al, et
- la réaction exothermique a lieu entre le premier élément et Si ou Al, et aboutit à la formation de siliciures ou d'aluminiures.

3. Procédé selon la revendication 1 ou 2, dans lequel le premier élément est Nb ou Mo.

4. Procédé selon l'une quelconque des revendications 1 à 3, dans lequel le deuxième élément est Si.

5. Procédé selon la revendication 1, dans lequel:
- le premier élément est Ti;
- le deuxième élément est choisi parmi les éléments suivants: Si ou Al, et
- la réaction exothermique a lieu entre le premier élément et Si ou Al, et aboutit à la formation de siliciures ou d'aluminiures.

6. Procédé selon la revendication 5, dans lequel le deuxième élément est Al.

7. Procédé selon l'une quelconque des revendications 1 à 6, dans lequel on déplace un deuxième faisceau énergétique (11) sur la première couche (12), avant de déposer la deuxième couche (15), l'énergie apportée par le deuxième faisceau permettant de fondre superficiellement et localement la première couche.

8. Procédé selon l'une quelconque des revendications 1 à 7, dans lequel on réitère les opérations précitées jusqu'à obtenir ladite pièce.

9. Procédé selon l'une quelconque des revendications 1 à 8, appliqué à la fabrication d'une pièce métallique soumise à des températures de fonctionnement comprises entre 600 °C et 1500 °C ou supérieures à 1500 °C.

10. Procédé selon l'une quelconque des revendications 1 à 9, appliqué à la fabrication d'une pièce de turbomachine.

## Patentansprüche

1. Verfahren zur Herstellung eines Bauteils durch selektive Pulverschmelzung, bei dem:
- eine erste Schicht (12) eines ersten Pulvers (2) aufgebracht wird, die als Hauptelement ein erstes Element hat,
- auf die erste Schicht eine zweite Schicht (15) eines zweiten Pulvers (22) aufgebracht wird, die als Hauptelement ein zweites Element hat, das sich vom ersten Element unterscheidet,
- ein erster Energiestrahl (11), beispielsweise ein Laserstrahl oder ein Elektronenstrahl, auf der zweiten Schicht (15) bewegt wird, wobei es die von dem ersten Strahl gelieferte Energie ermöglicht, eine exotherme Reaktion zwischen dem ersten Element und dem zweiten Element zu initiieren, wobei es die durch diese exotherme Reaktion freigesetzte Energie ermöglicht, lokal die erste und zweite Schicht (12, 15) miteinander zu verschmelzen.

2. Verfahren gemäß Anspruch 1, bei dem:
- das erste Element unter den folgenden Elementen ausgewählt ist: Nb, Mo, V, Ta, Cr, Fe, Co, Ni,
- das zweite Element unter den folgenden Elementen ausgewählt ist: Si oder Al, und
- die exotherme Reaktion zwischen dem ersten Elemente Si oder Al stattfindet und zur Bildung von Siliziden oder Aluminiden führt.

3. Verfahren gemäß Anspruch 1 oder 2, bei dem das erste Element Nb oder Mo ist.

4. Verfahren gemäß einem der Ansprüche 1 bis 3, bei dem das zweite Element Si ist.

5. Verfahren gemäß Anspruch 1, bei dem:
- das erste Element Ti ist,
- das zweite Element unter den folgenden Elementen ausgewählt ist: Si oder Al, und
- die exotherme Reaktion zwischen dem ersten Element und Si oder Al stattfindet und zur Bildung von Siliziden oder Aluminiden führt.

6. Verfahren gemäß Anspruch 5, bei dem das zweite Element Al ist.

7. Verfahren gemäß einem der Ansprüche 1 bis 6, bei dem ein zweiter Energiestrahl (11) auf der ersten Schicht (12) vor dem Aufbringen der zweiten Schicht (15) bewegt wird, wobei es die von dem zweiten Strahl gelieferte Energie ermöglicht, oberflächlich und lokal die erste Schicht zu schmelzen.

8. Verfahren gemäß einem der Ansprüche 1 bis 7, bei dem die vorgenannten Vorgänge wiederholt werden, bis das Bauteil erhalten wird.

9. Verfahren gemäß einem der Ansprüche 1 bis 8, das für die Herstellung eines metallischen Bauteils verwendet wird, das Betriebstemperaturen zwischen 600 °C und 1500 °C oder über 1500 °C ausgesetzt ist.

10. Verfahren gemäß einem der Ansprüche 1 bis 9, das für die Herstellung eines Bauteils einer Turbomaschine verwendet wird.

## Claims

1. A method of fabricating a part by selectively melting powder, the method comprising the following steps:
• depositing a first layer (12) of a first powder (2) having a first element as its main element;
• depositing, on the first layer, a second layer (15) of a second powder (22) having a second element as its main element, which second element is different from the first element; and
• moving a first energy beam (11), e.g. a laser beam or an electron beam, over the second layer (15), the energy delivered by the first beam serving to initiate an exothermic reaction between the first element and the second element, the energy given off by the exothermic reaction acting to locally melt together the first and second layers (12, 15).

2. A method according to claim 1, wherein:
• the first element is selected from the following elements: Nb, Mo, V, Ta, Cr, Fe, Co, Ni;
• the second element is selected from the following elements: Si or Al; and
• the exothermic reaction takes place between the first element and Si or Al, and causes silicides or aluminides to be formed.

3. A method according to claim 1 or claim 2, wherein the first element is Nb or Mo.

4. A method according to any one of claims 1 to 3, wherein the second element is Si.

5. A method according to claim 1, wherein:
• the first element is Ti;
• the second element is selected from the following elements: Si or Al; and
• the exothermic reaction takes place between the first element and Si or Al, and causes silicides or aluminides to be formed.

6. A method according to claim 5, wherein the second element is Al.

7. A method according to any one of claims 1 to 6, wherein a second energy beam (11) is moved over the first layer (12) prior to depositing the second layer (15), the energy delivered by the second beam acting to locally and superficially melt the first layer.

8. A method according to any one of claims 1 to 7, wherein the above-specified operations are reiterated until said part is obtained.

9. A method according to any one of claims 1 to 8, applied to fabricating a metal part that is to be subjected to operating temperatures lying in the range 600°C to 1500°C or higher than 1500°C.

10. A method according to any one of claims 1 to 9, applied to fabricating a turbomachine part.
